# EUROPÄISCHE PATENTANMELDUNG

(11) **EP 0 707 953 A2**
(43) Veröffentlichungstag der Anmeldung: **24.04.1996**
(21) Anmeldenummer: 95115987.0
(22) Anmeldetag: 11.10.1995
(51) Int. Cl.: B32B 27/08, B32B 33/00, C08L 33/12, C08L 55/02

(54) **Verbunde aus thermoplastischen Kunststoffschichten für Sanitärartikel**

(30) Priorität: 12.10.1994 DE 44363818
(71) Anmelder: Röhm GmbH, D-64293 Darmstadt (DE)
(72) Erfinder: Müller, Michael, Dr., D-64625 Bensheim (DE); Benz, Volker, Dr., D-64739 Höchst (DE); Numrich, Uwe, Dr., D-64331 Weiterstadt (DE); Pühler, Horst, D-64367 Mühltal (DE); Wopker, Wilhelm, D-64404 Bickenbach (DE)

(57) **Zusammenfassung**

Die Erfindung betrifft Verbundstoffe VS aus mindestens zwei Kunststoffschichten A und C, geeignet für die Herstellung von Artikeln, die an einer Oberfläche mit Wasser in Kontakt kommen, welches Temperaturen zwischen 0 und 90 Grad C aufweist, wobei die mit Wasser in Kontakt kommende Schicht A aus einem thermoplastischen schlagzähen Polymethylmethacrylat-Kunststoff SP und die Schicht C aus einem schlagzähen Kunststoff aufgebaut sind, mit den Merkmalen, daß der die Schicht A bildende schlagzähe Polymethylmethacrylat-Kunststoff SP eine Vicat-Erweichungstemperatur VET nach ISO 306, Verfahren B, von mindestens 95 Grad C und eine Kerbschlagzähigkeit SZ nach ISO 180 1A von mindestens 3,0 KJm⁻² aufweist, sowie daß die Schicht C aus einem schlagzähen Acrylnitril-Styrol-Copolymerisat VP besteht. In einer bevorzugten Ausführungsform der Erfindung ist zwischen der Schicht A und der Schicht C eine weitere Schicht B aus einem thermoplastischen Polymethylmethacrylat-Kunststoff P angeordnet.

## Beschreibung

Die Erfindung betrifft Verbundstoffe aus mindestens zwei Kunststoffschichten A und C, geeignet für die Herstellung von Sanitärartikeln, die an einer Oberfläche mit Wasser, das eine Temperatur von bis zu 90 Grad C aufweisen kann, in Kontakt kommen, wobei die mit dem Wasser in Kontakt kommende, auf der Trägerschicht C befindliche Schicht A aus einem schlagzähen, thermoplastischen Polymethylmethacrylat-Kunststoff SP, der eine Vicat-Erweichungstemperatur VET nach ISO 306, Verfahren B, von mindestens 95 Grad C und der eine Kerbschlagzähigkeit KSZ nach ISO 180 1A von mindestens 3.0 KJm⁻² aufweisen muß, besteht und wobei die Trägerschicht C aus einem thermoplastischen, schlagzähen Acrylnitril-Styrol-Copolymerisat VP besteht. Vorzugsweise befindet sich zwischen den beiden Kunststoffschichten A und C eine weitere Trägerschicht B, aufgebaut aus einem Polymethylmethacrylat-Kunststoff P.

### Stand der Technik

Verbundstoffe aus verschiedenen Kunststoffschichten, enthaltend Polymethylmethacrylat-Schichten bzw. deren Verwendung für Sanitärartikel sind bekannt.
So wird in US-Patent 4,053,545 ein Verfahren zur Herstellung von Sanitärartikeln beschrieben, bei dem eine Platte aus thermoplastischem Kunststoff, vorzugsweise ein aus einem Gießharz hergestelltes Polymethylmethacrylat, durch Wärmeverformung in die Form des Sanitärartikels gebracht wird und mit einer Schaumschicht aus einem thermoplastischen Kunststoff, die im Spritzgußverfahren erzeugt worden ist, hinterlegt wird. Die Haftung des Verbundes aus Polymethylmethacrylat und Schaumstoff wird durch Klebstoffe verbessert.
In EP-A 589 343 wird ein Verfahren zur Herstellung von dreidimensional geformten, wannen- und schalenförmigen Körpern aus mehreren Kunststofflagen, mit einer konkaven Schaumseite, beschrieben, wobei auf die konvexe Seite der Schicht aus Polymethylmethacrylat eine verstärkende Schicht eines reaktiven Isocyanatharzes aufgetragen wird, das zu einem steifen Polyurethankunststoff aushärtet.
Kennzeichnend ist, daß die konvexe Seite der Schicht aus Polymethylmethacrylat mit einer Lösung eines im wesentlichen unvernetzten Polymerharzes mit starker Kristallisationsneigung und mit Urethan-, Ester- und/oder Hydroxylgruppen beschichtet wird.
EP-A 266 107 beschreibt Formteile mit einer dekorativen Oberfläche bestehend aus einem spritzgegossenen Polymersubstrat und einem Platten- oder Folienmaterial für die dekorative Oberfläche, wobei das Platten oder Folienmaterial aus einem weitestgehend unorientierten, witterungsstabilen Polymermaterial besteht, welches homogen verteilte Farbpigmente enthält. Gemäß der Beschreibung besteht das Folienmaterial vorzugsweise aus Polymethacrylat-Kunststoffen, die schlagzähmodifiziert sein können, während das Polymersubstrat vorzugsweise aus Polymerisaten besteht, die gute Spritzgußeigenschaften aufweisen und die billig sind.
In EP-A 454 520 wird ein Verfahren zur Herstellung einer Folie eines Verbundmaterials beschrieben, mit einer Platte aus Polymethylmethacrylat, die die äußere Schicht des Verbundmaterials ausmacht und einer Stützschicht aus thermoplastischem Material, beispielsweise Acrylnitril-Butadien-Styrol (ABS)-Terpolymerisat , wobei im Hinblick auf das Erhalten einer vollständigen Kohäsion und Verbindung der zwei Schichten untereinander verschiedene Verfahrensparameter beachtet werden müssen.
In DE-OS 20 00 159 werden Sanitärartikel beansprucht, die zumindest teilweise aus einem Kern aus geschäumtem thermoplastischem Material und ungeschäumten Oberflächenüberzügen aus Polymethylmethacrylat bestehen. Die beschriebenen Sanitärartikel werden vorzugsweise in einem zweistufigen Spritzgußverfahren hergestellt. Der Oberflächenüberzug aus Polymethylmethacrylat kann wiederum Farbpigmente enthalten.
US-Patent 4,844,944 beschreibt mehrschichtige Kunststoff-Verbunde mit hoher Schlagzähigkeit und geringer Delaminierungstendenz, wobei eine polymere Deckschicht chemisch an eine Substratschicht gebunden wird, die aus einem vernetzten Isocyanat-modifizierten Polyester- oder Polyetherharz besteht. Die Deckschicht besteht aus einem thermoplastischen Polymerisat, beispielsweise aus Polymethylmethacrylat und kann Farbpigmente, Füllstoffe oder andere Additive enthalten. Solche mehrschichtigen Verbunde können für Sanitärartikel verwendet werden.
In DE-OS 31 28 985 werden Schichtstoffe auf Polymethylmethacrylat-Grundlage beschrieben, welche außer einer Polymethylmethacrylat-Schicht auch mindestens eine Polymethylmethacrylat-Schicht mit hoher Schlagzähigkeit aufweisen. Weiterer Gegenstand der Erfindung sind geformte Gegenstände, welche aus diesen Schichtstoffen hergestellt sind, wie beispielsweise Sanitärartikel und Platten für die Einrichtungsgegenstände. Bei der Herstellung solcher Schichtstoffe wird die Polymethylmethacrylat-Schicht vorzugsweise als Platte extrudiert, wobei unmittelbar nach der Kalandrierung der Polymethylmethacrylat-Schicht die Polymethylmethacrylat-Schicht mit hoher Schlagzähigkeit als Folie aufgebracht wird. Weiterhin bevorzugt stellt die Schicht aus Polymethylmethacrylat mit hoher Schlagzähigkeit den Träger bzw. die Unterlage für die Schicht aus Polymethylmethacrylat dar.

### Aufgabe und Lösung

Die vom Stand der Technik umfaßten Verbundsysteme weisen Oberflächenschichten aus Polymethylmethacrylat auf, die bei häufigem Kontakt mit Wasser, insbesondere bei Temperaturen über 60 Grad C, verstärkt Rißbildung zeigen. Dies gilt gleichermaßen für hochmolekulare Polymethylmethacrylat-Gießharze wie auch für thermoplastisch verarbeitbare Polymethylmethacrylat-Formmassen und macht solche Polymerisate für den Einsatz in Sanitärmaterialien, wie insbesondere Badewannen, Waschbecken oder Spülen, nur bedingt brauchbar.
Geringfügig besser brauchbar sind für solche, mit heißem Wasser häufig belastete, Sanitärobjekte Beschichtungen aus schlagzähen Polymethylmethacrylaten, wie sie beispielsweise in DE-OS 31 28 985 beschrieben werden.
Allerdings werden in DE-OS 31 28 985 die schlagzähen Polymethacrylate bevorzugt als Trägerschichten eingesetzt, womit Verbundsysteme resultieren, bei denen das unmodifizierte Polymethacrylat als Oberflächenschicht, die in Kontakt mit Wasser kommt, auftritt.

Die daraus resultierende Aufgabe bestand in der Bereitstellung von Verbundsystemen aus Kunststoffen für Sanitärmaterialien, deren Oberflächenschicht den häufigen Kontakt mit Wasser, insbesondere bei Temperaturen über 60 Grad C ohne Rißbildung übersteht und die eine hohe Schlagzähigkeit aufweisen.
Überraschenderweise wurde gefunden, daß Verbundstoffe VS aus mindestens zwei Kunststoffschichten A und C diese Aufgabe hervorragend lösen, wenn die mit dem Wasser in Kontakt kommende Schicht A aus einem thermoplastischen schlagzähen Polymethylmethacrylat-Kunststoff SP und die darunter liegende Trägerschicht C aus einem thermoplastischen schlagzähen Kunststoff VP bestehen, mit den kennzeichnenden Merkmalen, daß der die Schicht A bildende schlagzähe Polymethylmethacrylat-Kunststoff SP eine Vicat-Erweichungstemperatur VST nach ISO 306, Verfahren B, von mindestens 95 Grad C und eine Schlagzähigkeit SZ nach ISO 180 1A von mindestens 3.0 kJm⁻² aufweist, sowie daß die Schicht C aus einem schlagzähen Acrylnitril-Styrol-Copolymerisat VP aufgebaut ist.
Bevorzugt sind Verbundstoffe VS, bei denen zwischen der mit Wasser in Kontakt kommenden Schicht A und der Trägerschicht C eine zusätzliche Trägerschicht B aus einem thermoplastischen Polymethylmethacrylat-Kunststoff P angeordnet ist. Die Schichten A, B und C können 0,1 bis 10 Gew.-% Farbstoff und/oder Pigment, bezogen auf die Schicht, enthalten.
Weiterhin bevorzugt sind Verbundstoffe VS, an deren der Trägerschicht B gegenüberliegenden Seite der Schicht C eine Verstärkungsschicht D aus einem härtbaren und gegebenenfalls schäumbaren Gießharz UP angebracht ist.

Besonders bevorzugt enthält die Verstärkungsschicht D 5 bis 40 Gew.-% Füllstoffe bezogen auf das Gießharz UP, wie Mineralien oder Faserstoffe, insbesondere Glasfasern.
In weiteren bevorzugten Ausführungsformen der Erfindung betragen die Dicken der Schicht A zwischen 0,2 und 5 mm, der Schicht B gegebenenfalls zwischen 0,5 und 20 mm, der Schicht C zwischen 0,5 und 20 mm sowie der Schicht D gegebenenfalls B zwischen 3 und 20 mm.
Bevorzugt werden die Verbundstoffe VS aus den Schichten A und C bzw. A, B und C durch Coextrusion hergestellt, während die Schicht D beispielsweise durch Reaktionsspritzguß auf den Verbund aus A und C bzw. A, B und C aufgebracht werden kann.
Die erfindungsgemäßen Verbundstoffe VS aus den Schichten A und C, bzw. A, B und C können durch Wärmeverformung, wie beispielsweise Tiefziehen, zu den gewünschten Sanitärartikeln verarbeitet werden, ohne daß Veränderungen bezüglich der Eigenschaften der mit Wasser in Kontakt stehenden Schicht A auftreten.

### Durchführung der Erfindung

### Die Kunststoffe P, SP, VP und UP

Die für die, gegebenenfalls anwesende, zusätzliche Trägerschicht B eingesetzten Polymethylmethacrylat-Kunststoffe P bestehen aus 80 bis 100 Gew.-% Methylmethacrylat und 0 bis 20 Gew.-% damit copolymerisierbaren Monomeren, wie beispielsweise Alkylacrylate mit 1 bis 4 Kohlenstoffatomen, Vinylaromaten, wie Styrol oder α-Methylstyrol oder (Meth)acrylnitril. Das mittlere Molekulargewicht der Polymerisate P beträgt zwischen 10⁴ und 10⁶, vorzugsweise zwischen 3 x 10⁴ und 5 x 10⁵ Dalton (zur Bestimmung von M_{w} per Gelpermeationschromatographie oder per Streulichtmethode vgl. beispielsweise H.F. Mark et al., Encyclopedia of Polymer Science and Engineering, 2nd. Ed., Vol. 10, Seiten 1ff, J. Wiley, 1989). Die Polymerisate P sind gut extrudier- und spritzgießbar, wobei bei beiden Verarbeitungstechniken Temperaturen über 300 Grad C vermieden werden sollten.
Die ebenfalls thermoplastischen schlagzähen Polymethylmethacrylat-Kunststoffe SP, die für die mit Wasser in Kontakt kommenden Schichten A eingesetzt werden, sind im allgemeinen zwei- oder mehrstufige Emulsionspolymerisate EP, die in der äußeren Hülle aus Polymethylmethacrylat-Kunststoff HP bestehen, wie beispielsweise aus dem oben angeführten Polymethylmethacrylat-Kunststoff P, und die im Inneren einen Gummi GP aus vernetztem Polyacrylat enthalten. Bevorzugt sind Emulsionspolymerisate mit einem wenigstens dreistufigen Aufbau, also solche Latex-Teilchen, die im Gummi GP aus vernetztem Polyacrylat noch einen harten Polymerkern, vorzugsweise aus Polymethylmethacrylat HP, aufweisen. Der Anteil der Emulsionspolymerisate EP an den schlagzähen Polymethylmethacrylat-Kunststoffen SP liegt zwischen 1 und 80 Gew.-%, vorzugsweise zwischen 5 und 70 Gew.-% bezogen auf SP, wobei die restlichen Gewichtsanteile von dem nicht mit den Latexteilchen kovalent verbundenem Polymethylmethacrylat-Kunststoff P ausgemacht werden.

Vorzugsweise werden die schlagzähen Polymethylmethacrylat-Kunststoffe SP durch Abmischen der Emulsionspolymerisate EP mit Polymethylmethacrylat-Kunststoffen P hergestellt, wobei beispielsweise die Emulsionen von EP und P gemischt werden und anschließend die Wasserphase und die Emulgatoren abgetrennt werden oder wobei zunächst das Emulsionspolymerisat EP aus der wäßrigen Phase isoliert wird und anschließend mit dem Polymethylmethacrylat-Kunststoff P in der Schmelze gemischt wird.
Insgesamt sollen die Latexteilchen, die das Emulsionspolymerisat EP bilden, einen Durchmesser zwischen 0,1 und 3 µm, bevorzugt zwischen 0,15 und 1 µm (mit eingelagertem harten Kern) aufweisen. Prinzipiell ist der Aufbau solcher Latexteilchen und die Isolierung des Polymerisats EP beispielsweise in EP-A 113 924 (US-A 4,513,118) beschrieben.
Zweckmäßig arbeitet man bei der in der wäßrigen Phase durchgeführten Emulsionspolymerisation im neutralen bzw. leicht sauren pH-Bereich, wobei die Verwendung langkettiger Alkylsulfate bzw. Alkylsulfonate als Emulgatoren günstig ist. Als Polymerisationsinitiatoren dienen zweckmäßig die einschlägig bekannten Azoverbindungen bzw. organische oder anorganische Peroxide, wie beispielsweise Persulfate. Im allgemeinen liegt der Gehalt an Initiatoren im Bereich zwischen 10⁻³ und 1 Gew.-% bezogen auf die Monomeren. Vorzugsweise besteht der Polyacrylat-Gummi GP aus den Monomeren Ethylacrylat, 2-Ethylhexylacrylat, Aralkoxyacrylat, sowie besonders bevorzugt aus Butylacrylat, wobei in der Regel noch vernetzende Monomere mit mindestens zwei radikalisch polymerisierbaren, ethylenisch ungesättigten Gruppen, wie beispielsweise Allylmethacrylat, Ethylenglykoldimethacrylat oder Triallylcyanurat, in Mengen von 0,1 bis 5 Gew.-%, bezogen auf die Monomeren, anwesend sind. Allylmethacrylat und Triallylcyanurat wirken als Pfropfvernetzer, die die äußere Hülle der Elastomerteilchen aus Polymerisat HP wenigstens teilweise kovalent mit der Gummiphase GP, d.h. zu mehr als 5 Gew.-% bezogen auf HP, verknüpft.
Die schlagzähen Polymethacrylat-Kunststoffe SP sind thermoplastisch und werden in der Regel wie die Polymerisate P extrudiert oder spritzgegossen, wobei wiederum Verarbeitungstemperaturen über 300 Grad C vermieden werden sollten.

Die Trägerschicht C ist aus schlagzäh-modifizierten Styrol-Acrylnitril(SAN)-Polymerisaten VP aufgebaut, wie vorzugsweise aus Acrylnitril-Butadien-Styrol-Terpolymerisaten (ABS: vgl. hierzu beispielsweise Kirk-Othmer, Encyclopdia of Chemical Technology, 3rd. Ed., Vol. 1, Seiten 442 bis 456, J. Wiley, New York 1978). Charakteristisch ist, daß die SAN-Hartphase mit dem Polymethylmethacrylat P der Trägerschicht B verträglich ist und somit eine ausgezeichnete Haftung zwischen den Schichten A und C bzw. B und C gewährleistet ist.

Im allgemeinen liegen die Schlagzähigkeiten der ABS-Polymerisate deutlich über denjenigen der die Schicht A aufbauenden schlagzähen Polymethacrylate SP, was zu einer deutlichen Erhöhung der Schlagzähigkeit des gesamten Verbundstoffes führt. Die Anordnung der Schicht C unterhalb der Schicht A bzw. der Trägerschicht B wird notwendig, da schlagzähmodifizierte Styrol-Acrylnitril-Copolymerisate unter anderem eine geringe Lichtstabilität und geringe Stabilität gegen thermo-oxidative Belastung aufweisen und somit für den Einsatz an der mit Wasser in Kontakt kommenden Oberfläche (Schicht A) ungeeignet sind.

Die die Schicht D aufbauenden Kunststoffe UP sind vorzugsweise Polyurethan-Kunststoffe (vgl. beispielsweise Kirk-Othmer, Encyclopedia of Chemical Technology, 3rd. Ed., Vol. 23, Seiten 576 bis 608, J. Wiley, New York, 1983) oder Harze aus ungesättigten Polyestern (vgl. beispielweise Kirk Othmer, loc.cit, Vol. 18, Seiten 575 bis 594, J. Wiley, New York, 1982). Polyurethan-Kunststoffe UP enthalten in der Regel wenigstens ein Polyol, vorzugsweise ein Polyester-Polyol, und wenigstens ein zwei- oder mehrfunktionelles Isocyanat, das unter Ausbildung einer gegebenenfalls vernetzten Polymermatrix mit dem Polyol reagiert, sowie gegebenenfalls Härtungskatalysatoren und andere Additive. Wesentlich ist, daß die Mischung zu einem steifen, bei Raumtemperatur wenig elastischen Polyurethan-Kunststoff UP aushärtet. Sofern als Additive Wasser oder Treibmittel mitverwendet werden, bildet sich eine mehr oder weniger stark geschäumte Polyurethan-Kunststoffschicht D. Ihre Dichte liegt vorzugsweise im Bereich zwischen 200 bis 1000 kgm⁻³. Weiterhin kann der Polyurethan-Kunststoff UP in einer Menge von vorzugsweise 5 bis 40 Gew.-%, bezogen auf die gesamte Schicht D, Füllstoffe wie Mineralien oder Faserstoffe, beispielswiese Glasfasern, enthalten. Die Haftung zwischen Schicht C und Schicht D kann durch geeignete Haftmittel verbessert werden.
Die Schicht kann in einer weiteren Ausführungsform der Erfindung aus Harzformulierungen UP, aus ungesättigten Polyestern und monomerem Styrol bestehen, die im allgemeinen mit Hilfe von radikalischen Polymerisationsinitiatoren zu den Polyesterharzen UP polymerisiert werden. Unerläßliche Bedingung für den Einsatz solcher Polyesterharze UP ist allerdings das Vorhandensein der Schicht C aus schlagzähem Styrol-Acrylnitril-Copolymerisat VP, das im Gegensatz zu dem Polymethylmethacrylat P in Schicht B nicht von den monomeren Bestandteilen des Polyesterharzes UP angegriffen wird.
Ebenso wie der Polyurethan-Kunststoff kann das Polyesterharz in einer Menge von beispielsweise 5 bis 40 Gew.-% bezogen auf die gesamte Schicht D, Füllstoffe wie Mineralien oder Faserstoffe, beispielsweise Glasfasern, enthalten.

### Herstellung der Verbundstoffe VS

Die Verbunde VS aus den Schichten A, bestehend aus dem schlagzähen Polymethylmethacrylat-Kunststoff SP, gegebenenfalls B, bestehend aus dem Polymethylmethacrylat-Kunststoff P und C aus dem schlagzähen Styrol-Acrylnitril-Copolymerisat VP, werden bevorzugt durch Coextrusion nach den bekannten Verfahren der Zweischicht- bzw. der Dreischicht-Coextrusion hergestellt. Verfahren der Zweischicht- bzw. der Dreischicht-Coextrusion werden beispielsweise in EP-A 418 681 (= US-A 5,066,435) und EP-A 484 797 für die Zweischicht-Coextrusion bzw. in DE-A 32 44 953 (= US-A 4 707 393) und DE-A 33 12 611 (US-A 4,576,870) für die Dreischicht-Coextrusion beschrieben. Die dabei vorteilhaft erzeugten Schichtdicken liegen für die Schicht A zwischen 0,2 und 5 mm, bevorzugt zwischen 0,5 und 3 mm, für die Schicht B zwischen 0,5 und 20 mm, bevorzugt zwischen 1 und 10 mm sowie für die Schicht C zwischen 0,5 und 20 mm, bevorzugt zwischen 1 und 10 mm. Bei der Verarbeitung der thermoplastischen Polymethylmethacrylat-Kunststoffe P und SP ist zu beachten, daß die Temperatur im Extruder unterhalb von 300 Grad C bleibt, um Zersetzungserscheinungen an den Kunststoffen P und SP zu vermeiden.
In einer weiteren Ausführungsform der Erfindung kann die Schicht A als Folie auf Schicht C, die beispielsweise durch Extrusion hergestellt wird, bzw. auf den Verbund von Schicht B und Schicht C die jeweils durch Coextrusion hergestellt werden, durch Laminieren aufgebracht werden, wie in DE-A 31 28 985 beschrieben. Die erforderliche Laminierungstemperatur wird dabei durch entsprechende Heizaggregate erzeugt oder entspricht der Oberflächentemperatur der den Extruder verlassenden Schicht C bzw. Schicht B an der Stelle, wo die Schicht A laminiert wird.
Die Verbundstoffe VS werden vorzugsweise mit der Verstärkungsschicht D beschichtet, nachdem die Verbunde aus den Schichten A und C bzw. A, B und C bis zum thermoplastischen Zustand erhitzt, beispielsweise mittels Positiv- oder Negativformwerkzeugen, dreidimensional verformt und durch Abkühlung unter die Erweichungstemperatur in ihrer endgültigen Form, die beispielsweise Sanitärartikel wie Badewannen, Duschtassen, Spül- oder Waschbecken umfassen kann, fixiert worden sind. Die erforderliche Dicke der verstärkenden Schicht D hängt von der Größe und Gestalt des dreidimensional geformten Körpers ab. Für Badewannen ist eine Schichtdicke von 4 bis 20 mm geeignet; für Duschtassen und Körper vergleichbarer Größe und Beanspruchbarkeit reichen oft schon 3 bis 10 mm Schichtdicke.
Das Harzgemisch aus Polyol, Polyisocyanat und gegebenenfalls Zusätzen, das im gehärteten Zustand den Polyurethan-Kunststoff bzw. allgemein die härtbare Harzmischung UP bildet, wird vorzugsweise mittels einer Zweistoff-Mischdüse auf die Schicht C, die sich im allgemeinen an der konvexen Seite des wannen- oder schalenförmigen Körpers befindet, aufgetragen, wobei sehr schnell Härtung eintritt.

### Vorteilhafte Wirkungen der Erfindung

Die erfindungsgemäßen Verbundstoffe VS weisen eine hohe Schlagzähigkeit auf, die durch die Schicht A aus schlagzähem Polymethylmethacrylat-Kunststoff SP sowie durch die Schicht C aus schlagzähem Acrylnitril-Styrol-Copolymerisat VP und gegebenenfalls durch die Schicht D aus dem Polyurethanharz UP bedingt wird. Durch die Verträglichkeit zwischen Polymethylmethacrylat und der Styrol-Acrylnitril-Hartphase der Copolymerisate VP bedingt, tritt eine ausgezeichnete Haftung zwischen den Schichten A und C bzw. B und C auf, was maßgeblich zur hohen Schlagzähigkeit der Verbundstoffe VS beiträgt.

Die mit dem Wasser in Kontakt kommende Schicht A aus Kunststoff SP weist eine ausgezeichnete Beständigkeit im Heißwasserwechseltest HWWT nach DIN EN 263 auf, der im folgenden beschrieben wird, bei gleichzeitig hervorragender Haftung auf Schicht C aus schlagzähmodifiziertem Styrol-Acrylnitril(SAN)-Copolymerisat bzw. auf Schicht B aus Polymethylmethacrylat-Kunststoff P. Die Rißbildungstendenz in Schicht A bei häufigem Kontakt mit Wasser, das Temperaturen von insbesondere oberhalb 60 Grad C aufweist, ist gegenüber den Verbundsystemen des Standes der Technik deutlich reduziert. Dabei ist hervorzuheben, daß sich die Risse, die sich einmal in Schicht A gebildet haben, schnell in die darunterliegenden Schichten fortpflanzen.

Durch die gute Einarbeitbarkeit von Farbpigmenten, von UV-Absorbern und/oder von löslichen Farbstoffen in die Schichten A, B und C sind lichtbeständige Sanitärartikel in fast allen Farbgebungen möglich, sofern die Farbpigmente und/oder die Farbstoffe lichtbeständig sind. Im allgemeinen enthalten die Schichten A, B und/oder C 0,1 bis 10 Gew.-% Farbstoffe, UV-Absorber und/oder Farbpigmente bezogen auf die Polymerisate SP, P und/oder VP.
Die Verbunde VS aus den Schichten A und C bzw. A, B und C sind leicht herstellbar, z.B. durch Coextrusion, und weisen eine ausgezeichnete thermische Umformbarkeit, beispielsweise im Tiefziehprozeß, auf. Damit werden auch Sanitärartikel mit komplexer Formgebung zugänglich.

Die folgenden Beispiele sollen die Erfindung erläutern. Folgende Messungen wurden an den Verbundstoffen VS beziehungsweise an den einzelnen Schichten durchgeführt:
1. Vicat-Erweichungstemperatur VST des Polymethylmethacrylats SP, das die Schicht A aufbaut, nach ISO 306, Verfahren B,
2. Kerbschlagzähigkeit des Polymethylmethacrylats SP, das die Schicht A aufbaut, nach ISO 180 1A
3. Heißwasserwechseltest HWWT gemäß DIN EN 263 ("Spezifizierung von gegossenen Acrylplatten für Base- und Duschwannen für den Hausgebrauch"):
   Ein rechtwinkliger Probekörper von (100 ± 2) mm Kantenlänge und einer Dicke entsprechend der Dicke der Verbundstoffe wird in etwa 2 Liter kochendes Wasser getaucht. Für 8 Stunden verbleibt der Probekörper im Wasser, während diese auf Raumtemperatur abkühlt. Man nimmt dann den Probekörper aus dem Wasser, wischt die Oberfläche mit einem feuchten Tuch und legt den Probekörper zur weiteren Trocknung 16 Stunden lang in einen Ofen bei (50 ± 2) Grad C. Dieser Zyklus ist am gleichen Probekörper zu wiederholen.
   Nach einer bestimmten Anzahl von Wiederholungen legt man den Probekörper 48 Stunden lang bei (50 ± 2) Grad C in eine Lösung von 200 g Eosin in 1 Liter Wasser, der 1 cm³ /Liter flüssiges Netzmittel zugesetzt sind. Dann nimmt man den Probekörper aus der Lösung und entfernt mit einem feuchten Tuch das Eosin von der Oberfläche des Probekörpers.
   Nachteilige Veränderungen im Aussehen (Blasen, Brüche, Risse etc.) , müssen mit dem bloßen Auge erkennbar sein und werden durch Spuren verbleibenden Eosins angezeigt.
4. Beständigkeit gegenüber Haushaltschemikalien gemäß DIN EN 263:
   Die Beständigkeit wird gegenüber folgenden Reagenzien überprüft. (Die in c) bis m) angegebenen Mengen basieren auf 100 % reiner Substanz. Jede Lösung ist unmittelbar vor der Anwendung herzustellen. Alle Reagenzien werden bei (23 ± 2) Grad C angesetzt und angewendet):
   a) Handelsübliches phenolisches Desinfektionsmittel (9,5 g/l in Wasser)
   b) Bleichmittel (= 5 % Massenanteil an freiem Chlor)
   c) Essig (6 % Volumenanteil Eisessig in Wasser)
   d) Alkohol (30 % Volumenanteil Ethanol in Wasser
   e) Ammoniak (50 % Volumenanteil gesättigter Ammoniak-Lösung in Wasser)
   f) Natrium-Hydroxid (gesättigte Lösung von Natrium-Hydroxid)
   g) Salz (gesättigte Lösung von Natrium-Chlorid in Wasser)
   h) Waschsoda (gesättigte Lösung von Natrium-Carbonat in Wasser)
   i) Zitronensäure (100 g/l in Wasser)
   j) Salzsäure (10 % Volumenanteil gesättigter Salzsäure in Wasser)
   k) Wasserstoffsuperoxid (10 % Volumenanteil gesättigter Lösung von Wasserstoffsuperoxid in Wasser) Anmerkung: Ein Uhrglas wird für dieses Reagenz nicht benötigt.
   l) Methylenblau (10 g/l in Wasser)
   m) Kaliumpermanganat (10 g/l in Wasser)

### BEISPIELE

### Beispiel 1

### Herstellung eines dreischichtigen Verbundstoffs VS1

Mittels Dreischichtcoextrusion wird ein Band aus drei Schichten A1, B1 und C1 mit einer Breite von 400 mm und einer Gesamtdicke von 5 mm hergestellt.
Folgende Maschinenkonfiguration und Maschinenparameter werden bei der Coextrusion verwendet:
Für Schicht A1:
Einschneckenextruder mit Schneckendurchmesser D = 25 mm L/D = 32, Drehzahl 87 mm⁻¹, Entgasungszonentemperatur = 240 Grad C,
für Schicht B1:
Einschneckenextruder mit Schneckendurchmesser D = 35 mm L/D = 32, Drehzahl 75 min⁻¹, Entgasungszonentemperatur = 240 Grad C,
für Schicht C1:
Einschneckenextruder mit Schneckendurchmesser D = 60 mm L/D = 32, Drehzahl 25 min⁻¹, Entgasungszonentemperatur = 240 Grad C,
sowie ein Dreischichtadapter zur Kombination von drei Schichten mit ähnlicher Dicke, eine Plattendüse mit 440 mm Breite und ein Dreiwalzenglättwerk mit liegender Walzenanordnung (Walzendurchmesser 160 mm; Walzentemperaturen zwischen 75 und 80 Grad C)
Die verwendeten Polymerisate für die Schichten A1, B1 und C1:

### 1. Schicht A1 aus schlagzähem Polymethylmethacrylat SP1:

Schicht A1 besteht aus schlagzähmodifiziertem Polymethylmethacrylat Plexiglas ® Y7H der Fa. Röhm GmbH mit 15 Gew.-% Anteil an Polybutylacrylat SP1, erhalten durch Abmischen von 64 Gew.-% Polymethylmethacrylat Plexiglas ® Y7H mit 36 Gew.-% eines Kern-Schale-Schale-Emulsionspolymerisats EP1 der Zusammensetzung 20 Gew.-Teile vernetzter Polymethylmethacrylat-Kern; 44 Gew.-Teile vernetztes Polybutylacrylat-Co-Styrol, das denselben Brechungsindex wie Polymethylmethacrylat aufweist, als erste Schale, sowie 36 Gew.-Teile Polymethylmethacrylat als zweite Schale (zur Herstellung von EP 1 vgl. EP-A 113 924). Die Vicat-Erweichungstemperatur VET von SP 1 beträgt 100 Grad C, die Kerbschlagzähigkeit KSZ 5,0 KJm⁻².

### 2. Schicht B1 aus Polymethylmethacrylat P1:

Schicht B1 besteht aus 98,5 Gew.-% Polymethylmethacrylat Plexiglas ® Y7H der Fa. Röhm GmbH und 1,5 Gew.-% Titandioxid-Pigment der Fa. Sachtleben.

### 3. Schicht C1 aus schlagzähem Styrol-Acrylnitril-Copolymerisat VP 1:

Schicht C1 besteht aus Acrylnitril-Butadien-Styrol-Terpolymerisat Magnum ® 555-27-7 der Fa. Dow Chemical.

Der resultierende dreischichtige Verbundstoff VS1 weist folgenden Aufbau und Dickenverteilung der Schichten auf:
- Schicht A1 aus SP1: 1 mm :: obere Schicht, die mit Wasser in Kontakt kommt
- Schicht B1 aus P1 : 1,5 mm :: mittlere Trägerschicht
- Schicht C1 aus VP1: 2,5 mm :: untere Trägerschicht
Die Schichten A1 und B1 bzw. B1 und C1 weisen untereinander eine ausgezeichnete Haftung auf.

### Beispiel 2

### Herstellung eines zweischichtigen Verbundstoffs VS2

Mittels Zweischichtcoextrusion wird ein Band aus zwei Schichten A2 und C2 mit einer Breite von 400 mm und einer Gesamtdicke von 5 mm hergestellt.
folgende Maschinenkonfiguration und Maschinenparameter werden bei der Coextrusion verwendet:
Für Schicht A2:
Einschneckenextruder mit Schneckendurchmesser D = 35 mm, L/D = 32, Drehzahl 90 min⁻¹, Entgasungstemperatur = 240 Grad C,
für Schicht C2:
Einschneckenextruder mit Schneckendurchmesser D = 60 mm, L/D = 32, Drehzahl 35 min⁻¹, Entgasungstemperatur = 240 Grad C,
sowie ein Zweischichtadapter zur Kombination von zwei Schichten ähnlicher Dicke, eine Plattendüse mit 440 mm Breite und ein Dreiwalzenglättwerk gemäß Beispiel 1.

Die verwendeten Polymerisate für die Schichten A2 und C2:

### 1. Schicht A2 aus schlagzähem Polymethylmethacrylat SP1:

Schicht A2 besteht aus schlagzähmodifiziertem Polymethylmethacrylat Plexiglas ® Y7H der Fa. Röhm GmbH mit 15 Gew.-% Anteil an Polybutylacrylat-Zähphasen gemäß Beispiel 1.

### 2. Schicht C2 aus schlagzähem Styrol-Acrylnitril-Copolymerisat VP1:

Schicht C2 besteht aus Acrylnitril-Butadien-Styrol-Terpolymerisat gemäß Beispiel 1.

Der resultierende zweischichtige Verbundstoff VS2 weist folgenden Aufbau und pickenverteilung der Schichten auf:
- Schicht A2 aus SP1: 1,5 mm :: obere Schicht, die mit Wasser in Kontakt kommt
- Schicht C2 aus VP1: 3,5 mm :: untere Trägerschicht
Die Schichten A2 und C2 weisen untereinander eine ausgezeichnete Haftung auf.

### Beispiel 3

### HWWT gemäß DIN EN 263 an VS1 und VS2

Die gemäß Beispiel 1 und 2 erhaltenen Verbundstoffe VS1 und VS2 werden dem Heißwasserwechseltest HWWT gemäß DIN EN 263 unterworfen, wobei die Probekörper aus den extrudierten Bändern geschnitten werden und wobei die Schichten A1 und A2 auf Veränderung untersucht wurde. Zum Vergleich wurde eine 5 mm dicke extrudierte Platte aus 98,5 Gew.-% Plexiglas ® Y7H der Fa. Röhm GmbH und 1,5 Gew.-% Titandioxid-Pigment der Fa. Sachtleben (Polymerisat P1 gemäß Beispiel 1) mitgeprüft:

| Material | Zyklen bis zur Rißbildung |
|---|---|
| VS1 | 440 |
| VS2 | 410 |
| P1 | 5 |

### Beispiel 4

### Prüfung der Chemikalienbeständigkeit gemäß DIN EN 263 an VS1 und VS2

Die gemäß Beispiel 1 und 2 erhaltenen Verbundstoffe VS1 und VS2 werden einer Prüfung auf Chemikalienbeständigkeit gemäß DIN EN 263 durch Auftrag der entsprechenden Reagenzien auf die Schichten A1 und A2 unterzogen: Beide Proben werden durch das phenolische Desinfektionsmittel leicht angequollen. Sie erfüllen ansonsten die Vorgaben der Norm DIN EN 263, d.h. alle gelisteten Reagenzien hinterließen keine sichtbaren und relevanten Veränderungen.

### Beispiel 5

### Thermoverformung der Verbundstoffe VS1 und VS2

Die Verbundstoffe VS1 und VS2 gemäß den Beispielen 1 und 2 werden durch beidseitige Infrarotbestrahlung auf Oberflächentemperaturen von 155 Grad C erwärmt und zu Badewannenähnlichen Formkörpern vakuumverformt. Die Verbundstoffe lassen sich sehr gut thermoverformen. Auch feine Ausformungen sind ohne Nachstempeln möglich. Die Oberflächenqualität der Formkörper ist ausgezeichnet.

## Patentansprüche

1. Verbundstoffe VS aus mindestens zwei Kunststoffschichten A und C, geeignet für die Herstellung von Artikeln, die an einer Oberfläche mit Wasser in Kontakt kommen, welches Temperaturen zwischen 0 und 90 Grad C aufweist, wobei die mit dem Wasser in Kontakt kommende Schicht A aus einem thermoplastischen, schlagzähen Polymethylmethacrylat-Kunststoff SP und die Schicht C aus einem schlagzähen Kunststoff aufgebaut sind,
dadurch gekennzeichnet,
daß der die Schicht A bildende schlagzähe Polymethylmethacrylat-Kunststoff SP eine Vicat-Erweichungstemperatur VST nach ISO 306, Verfahren B, von mindestens 95 Grad C und eine Kerbschlagzähigkeit KZ nach ISO 180 1A von mindestens 3,0 kJm⁻² aufweist, sowie daß die Schicht C aus einem schlagzähen Acrylnitril-Styrol-Copolymerisat VP aufgebaut ist.

2. Verbundstoffe VS gemäß Anspruch 1, dadurch gekennzeichnet, daß zwischen der Schicht A und der Schicht C eine weitere Schicht B aus einem thermoplastischen Polymethylmethacrylat-Kunststoff P angeordnet ist.

3. Verbundstoffe VS gemäß den Ansprüchen 1 und 2, dadurch gekennzeichnet, daß mit der Schicht C eine Verstärkungsschicht D aus einem härtbaren und gegebenenfalls schäumbaren Gießharz UP verbunden ist.

4. Verbundstoffe VS gemäß den Ansprüchen 1 bis 3, dadurch gekennzeichnet, daß die Verbunde aus den Schichten A und C sowie aus den Schichten A, B und C durch Coextrusion hergestellt werden.

5. Verbundstoffe VS gemäß den Ansprüchen 1 bis 4, dadurch gekennzeichnet, daß die Dicke der Schicht A zwischen 0,2 und 5 mm, die Dicke der Schicht B, soweit anwesend, zwischen 0,5 und 20 mm sowie die Dicke der Schicht C zwischen 0,5 und 20 mm liegt.

6. Verbundstoffe VS gemäß den Ansprüchen 1 bis 5, dadurch gekennzeichnet, daß die Dicke der Schicht A zwischen 0,5 und 3 mm, die Dicke der Schicht B zwischen 1 und 10 mm sowie die Dicke der Schicht C zwischen 1 und 10 mm liegt.

7. Verbundstoffe VS gemäß den Ansprüchen 3 bis 6, dadurch gekennzeichnet, daß die Dicke der Verstärkungsschicht D zwischen 3 und 20 mm liegt.

8. Verbundstoffe VS gemäß den Ansprüchen 1 bis 8, dadurch gekennzeichnet, daß die Schicht A sowie gegebenenfalls die Schichten B und C Farbstoffe, UV-Absorber und/oder Pigmente in Anteilen von 0,1 bis 10 Gew.-% bezogen auf das Polymerisat SP bzw. gegebenenfalls auf die Polymerisate P und VP enthalten.

9. Verbundstoffe VS gemäß den Ansprüchen 3 bis 8, dadurch gekennzeichnet, daß die Verstärkungsschicht D 5 bis 40 Gew.-% Füllstoffe bezogen auf das Gießharz UP, wie Mineralien oder Faserstoffe, enthält.

10. Verbundstoffe VS gemäß den Ansprüchen 3 bis 9, dadurch gekennzeichnet, daß das gehärtete Gießharz UP ein Polyurethanharz oder ein Harz, gebildet aus Anteilen an Styrol und an ungesättigten Polyestern ist.

11. Verbundstoffe VS gemäß den Ansprüchen 1 bis 10, dadurch gekennzeichnet, daß das schlagzähe Acrylnitril-Styrol-Copolymerisat VP ein Acrylnitril-Butadien-Styrol-Terpolymerisat ist.

12. Verwendung der Verbundstoffe VS gemäß den Ansprüchen 1 bis 11 zur Herstellung dreidimensional geformter Sanitärartikel.
